# EUROPEAN PATENT SPECIFICATION

(11) **EP 0 903 593 B1**
(45) Date of publication and mention of the grant of the patent: **22.11.2006**
(21) Application number: 98115295.2
(22) Date of filing: 10.04.1990
(51) Int. Cl.: G02B 5/02, G02B 6/04, F21V 8/00, F21S 2/00

(54) **Striated light diffuser and method of forming the same**
Gestreifter Lichtstreukörper und Herstellungsmethode dafür
Diffuseur de lumière rayé et son procédé de fabrication

(43) Date of publication of application: 24.03.1999
(62) Divisional of application: 90303857.8
(73) Proprietor: Oyama, Nobuo, Suginami-ku, Tokyo 167-0031 (JP)
(72) Inventor: Oyama, Nobuo, Suginami-ku, Tokyo 167-0031 (JP)
(74) Representative: Viering, Jentschura & Partner

(56) References cited:
- EP-A- 0 006 450
- EP-A- 0 152 493
- EP-A- 0 295 634
- DE-B- 1 203 310
- GB-A- 2 145 760
- US-A- 3 829 675
- PATENT ABSTRACTS OF JAPAN vol. 008, no. 233 (P-309), 26 October 1984 & JP 59 111604 A (SUMITOMO DENKI KOGYO KK), 27 June 1984
- PATENT ABSTRACTS OF JAPAN vol. 008, no. 138 (C-231), 27 June 1984 & JP 59 047428 A (ASAHI KASEI KOGYO KK), 17 March 1984
- PATENT ABSTRACTS OF JAPAN vol. 010, no. 308 (P-508), 21 October 1986 & JP 61 122609 A (ISEKI & CO LTD), 10 June 1986

## Description

### BACKGROUND OF THE INVENTION

### Field of the Invention

The present invention relates to an elongated structure for receiving light through an end or edge thereof, and radiating or diffusing the light out through a surface of the structure which is substantially perpendicular to the end or edge through which the light was introduced.

### Description of the Related Art

A conventional optical fiber or light pipe is designed to transmit light introduced into one end thereof to an opposite end with minimum loss of light through the circumferential surface of the fiber. This is possible since light entering the end of the fiber at an angle less than the numerical aperture of the fiber is totally internally reflected throughout the length of the fiber to the other end.

However, it is desirable in many applications to adapt an optical fiber to radiate or diffuse light introduced into an end thereof from a point light source out through the circumferential or peripheral surface thereof, and thereby function as an elongated light source in combination with the point light source. This has been done in the past by grinding or otherwise roughening the circumferential surface of the optical fiber to reduce the reflectance thereof. Internally propagating light incident on the roughened surface of the fiber is not completely internally reflected, but is partially scattered out of the fiber through the surface. A partially transparent, or translucent optical fiber such as "opal" glass made of acrylic resin by the Asahi Chemical Co. of Japan also radiates light out the circumferential surface thereof.

Although useful in some limited applications, the expedients of making an optical fiber translucent, or roughening the circumferential surface of an optical fiber to produce light radiation out through the surface thereof, are generally unsatisfactory in that the intensity of the radiated light decreases exponentially from the input end along the longitudinal axis of the fiber.

A third method of producing light radiation out the circumferential surface of an optical fiber is to make a series of small cuts in the surface thereof. This expedient is also unsatisfactory in that the radiated light intensity is discontinuous and uneven along the length of the fiber.

The modified optical fibers known in the prior art are not usable in practical applications such as back lights for displays, panel lights, and linear light radiators for photosynthetic reactors which require an even distribution of radiated light along the length of the radiating surface.

JP 59111604 discloses a light device, wherein sunshine is converged and guided into a room via an optical fiber. The incident light is guided to a fiber or bar having longitudinal or longitudinal and lateral grooves in the room; and the light scatterd in the fiber or bar is guided out.

US-A-3829675 discloses an illuminating means having a first light source and a generally solid integral elongate member formed from a transparent material and having a first longitudinal portion which has a smooth surface and a second longitudinal portion which has a roughened surface.

EP 0 006 450 A1 discloses an area light source consisting of a prismatic light transparent body into which light enters through a small side surface and which has a big side surface through which light leaves. The big side surface can be provided with a plurality of equidistant microgrooves.

UK 2 145 760 A discloses a prism light guide luminaire consisting of a longitudinal hollow structure made of transparent dielectric material.

JP 61122609 discloses a solar light transmitting device constituted by bundling plural optical fiber unit bodies of a thin diameter consisting of a core and a clad. It is constituted by forming suitably the outside periphery of the optical fiber in at least a light inlet part and bundling it in a state that there is no gap between adjacent clads.

### SUMMARY OF THE INVENTION

It is an object of the invention to provide a light radiating device which is simple in structure, which has relatively large and extended light emitting surface and which can radiate light along a length in a uniform manner.

This is achieved by a light radiating device according to claim 1. Advantageous embodiments are described in the dependent claims.

The present invention overcomes the drawbacks of the prior art by forming striations in form of grooves or ridges in a light radiating or diffusing surface of an optical panel in such a manner that the intensity of light radiated out of the panel perpendicular to the longitudinal axis thereof is substantially uniform along the longitudinal axis. This is accomplished by forming the striations parallel to the longitudinal axis. The striations may be ridges or grooves having a circular, square, V-shaped, or other appropriate cross section.

The present light radiating structure is embodied as a flat panel, with the striations cut or otherwise formed in one of the flat surfaces thereof. The input light is introduced into the panel through one of the edges. The surface of the panel opposite the light radiating surface as well as the edges of the panel other than the edge through which the light is introduced may be coated with a reflective material.

More specifically, a light transmitting body fabricated in accordance with the present invention has a longitudinal axis, and a light radiating surface extending substantially parallel to the axis, the body being a rectangular panel, wherein the light radiating surface is a rectangular surface of the panel. A plurality of striations are formed in the light radiating surface parallel to the axis, which cause light entering the body along the axis to be radiated out of the body through the light radiating surface with substantially uniform intensity along the axis.

These or other features and advantages of the present invention will be apparent to those skilled in the art from the following detailed description, taken together with the accompanying drawings, in which like reference numerals refer to like parts.

### DESCRIPTION OF THE DRAWINGS

It is to be noted that the embodiments according to Figs. 1, 3-16 and 18 and the corresponding description passages as far as related to an optical fiber are not part of the invention.
FIG. 1 is a side elevation illustrating an optical fiber having a light radiating, striated circumferential surface;
FIG. 2 is a perspective view illustrating a panel having a light radiating, striated circumferential surface according to the invention;
FIGs. 3 to 6 are sectional views illustrating alternative configurations of striations applicable to a light radiating surface;
FIGs. 7 and 8 are sectional views illustrating a bundle of optical fibers before and after being fused together to fabricate a light radiating optical fiber;
FIG. 9 is a schematic side elevation illustrating the formation of an optical fiber having light radiating striations using a die;
FIG. 10 is a schematic diagram illustrating a method of fabricating an optical fiber;
FIG. 11 is a side elevation illustrating a modified optical fiber;
FIGs. 12, 13 and 14 are schematic diagrams illustrating alternative methods of fabricating an optical fiber;
FIGs. 15, 16 and 17 are graphs illustrating the performance of light radiating structure, wherein the structure related to Fig. 17 is fabricated in accordance with the present invention; and
FIG. 18 is a side elevation illustrating a modified optical fiber.

### DETAILED DESCRIPTION OF THE INVENTION

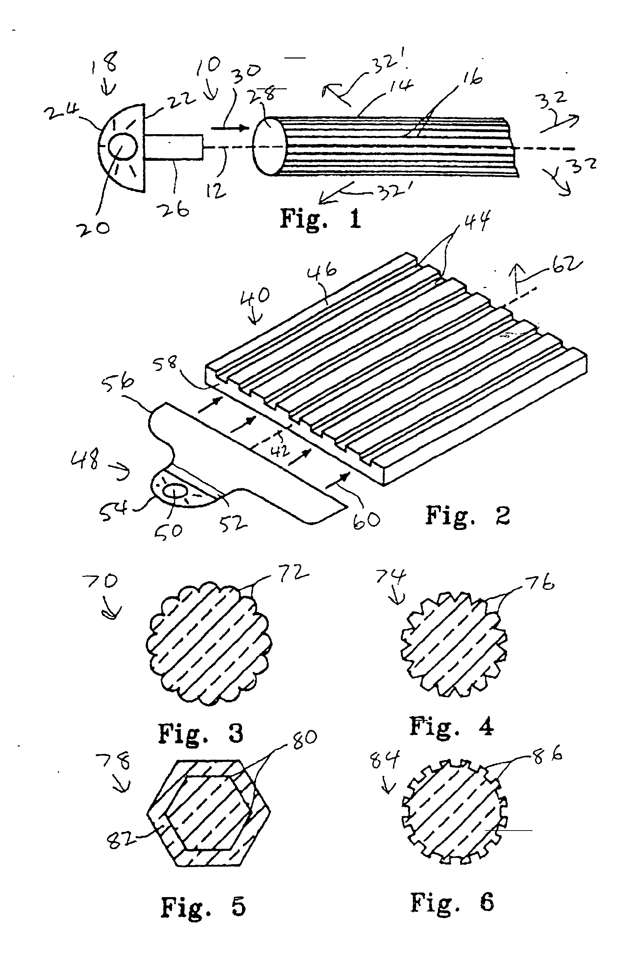

Referring now to FIG. 1 of the drawing, a light radiating or diffusing structure including a body in the form of an optical fiber is generally designated as 10, and has a longitudinal axis 12 and a peripheral or circumferential surface 14 which extends parallel to the axis 12. The fiber 10 has a circular cross section centered on the axis 12. A plurality of longitudinal striations 16 are formed in the circumferential surface 14 parallel to the axis 12. A light source 18 includes, for example, a point light source in the form a halogen bulb 20 mounted in a housing 22. A reflector 24 directs the light from the bulb 20 into a light guide 26 which transmits the light into an input face or end 28 of the optical fiber 10 along the longitudinal axis 12 thereof. The light propagates through the fiber 10 along the axis 12 as indicated by an arrow 30. Due to internal reflections in the optical fiber 10 which are affected by the striations 16, the light is progressively radiated out of the circumferential surface 14 of the fiber 10 along the axis 12 in directions indicated by arrows 32, and also in directions 32' if the end of the fiber 10 opposite the end 28 is made reflective. In accordance with an important feature, the intensity of light radiated out the circumferential surface 14 is substantially uniform along the axis 12.

An embodiment of the invention is illustrated in FIG. 2, including a body in the form of a light radiating panel 40 having a rectangular cross section centered on an axis 42. A plurality of longitudinal striations in the form of rectangular grooves 44 are formed in a rectangular surface 46 of the panel 40 parallel to the axis 42. The grooves 44 provide the same function as the striations 16 in the surface 14 of the optical fiber 10 illustrated in FIG. 1, and may be formed by molding, cutting, etching, cleaving, or any other suitable method.

A light source 48 includes a point light source in the form a halogen bulb 50 mounted in a housing 52. A reflector 54 directs the light from the bulb 50 into a light guide 56 which transmits the light into an input face or end 58 of the panel 40 along the longitudinal axis 42 thereof. The light guide 56 may include a plurality of optical fibers which are circularly bundled together at their ends facing the bulb 50, and spread out at their ends facing the panel 40 into a linear shape conjugate to the input end 58 of the panel 40.

The light propagates through the panel 40 along the axis 42 as indicated by arrows 60. Due to internal reflections in the panel 40 which are affected by the channels 44, the light is progressively radiated out of the circumferential surface 46 of the panel 40 along the axis 42 in a direction which is generally perpendicular to the surface 46 as indicated by an arrow 62. As with the optical fiber 10, the intensity of light radiated out the rectangular surface 46 is substantially uniform along the axis 42.

Preferably, the surfaces of the panel 40 other than the light input end 58 and the light radiating surface 46 are made highly reflective to enable radiation of light only out through the surface 46. This may be accomplished by polishing these surfaces to a high degree, or forming a reflective coating of aluminum or the like on the surfaces by evaporation, sputtering, or any other suitable method.

The striations may have a variety of cross sections as illustrated in FIGs. 3 to 6. In FIG. 3, an optical fiber 70 is formed with striations in the form of ridges 72 having a round, or circular cross section. In FIG. 4, an optical fiber 74 is formed with striations in the form of grooves 76 having a V-shaped cross section. In FIG. 5, an optical fiber 78 is formed with striations in the form of ridges 80 having a V-shaped cross section. The ridges 80 combine to form a hexagonal shape. The optical fiber 78 also includes a cladding layer 82 which conforms to the shape of the underlying ridges 80. FIG. 6 illustrates an optical fiber 84 formed with striations in the form of grooves 86 having a rectangular cross section.

It is within the scope of the present invention to form a panel having any other basic shape with longitudinal striations having any of the cross sections shown in FIGs. 2 to 6, or any other suitable cross section. The optical fiber or panel may be formed of any light transmissible material, such as glass or acrylic resin. In addition, a cladding layer may be formed over the striations in any alternative form of the structure in the manner illustrated in FIG. 5. The cladding layer, where provided, preferably has an index of refraction which is lower than that of the underlying structure. It is also within the scope of the invention to form the panel of a material having an index of refraction which is nonuniform throughout the cross section of the structure.

As discussed above, light propagating through a conventional optical fiber is totally internally reflected therein and propagates from an input end to an outlet end with minimal radiation out the circumferential surface of the fiber. Roughening the circumferential surface produces radiation out through the circumferential surface with an intensity which decreases exponentially along the length of the fiber.

The present longitudinal striations affect the internal reflection of light by creating additional reflections between the walls of adjacent striations. Each of these additional reflections causes the angle of incidence of the respective light rays to increase relative to the circumferential surface of the fiber. At a certain distance along the fiber, the angle of incidence of a given light ray will be increased by these multiple reflections beyond the angle of total internal reflection of the fiber, and be radiated out the circumferential surface of the fiber. The effect is essentially similar for the case of a panel structure formed with longitudinal striations. The exact mechanism by which the composite reflections interact with each other is complex and not fully understood. However, it appears that the amount of radiation along the length of a structure as affected by the longitudinal striations increases at an exponential rate which is similar to the rate of decrease created by indiscriminate roughening of the surface of the structure. The result is that the intensity of the radiated light is substantially uniform along the longitudinal axis of the structure.

It has been determined that increasing the number of striations per unit area along the light radiating surface of the structure increases the amount of radiated light for a given value of light introduced or directed into the end of the structure. Increasing the depth of the striations also increases the amount of radiated light. In addition, decreasing the radius of curvature of each of the individual striations increases the amount of radiated light. The number, depth, and radius of curvature of the striations may be varied over a wide range, and the particular values selected depend on the configuration of a particular application.

Although it is generally desirable to provide a light radiating structure with uniform radiation along the length thereof, it may be required in some applications that the amount of radiation increase or decrease along the length of the structure. This can be accomplished by varying the number, width, and/or depth of the striations. Increasing the width and/or depth of the striations increases the amount of radiated light.

The present light radiating structure can be fabricated using a variety of conventional methods, such as molding or casting, which will not be described in detail.

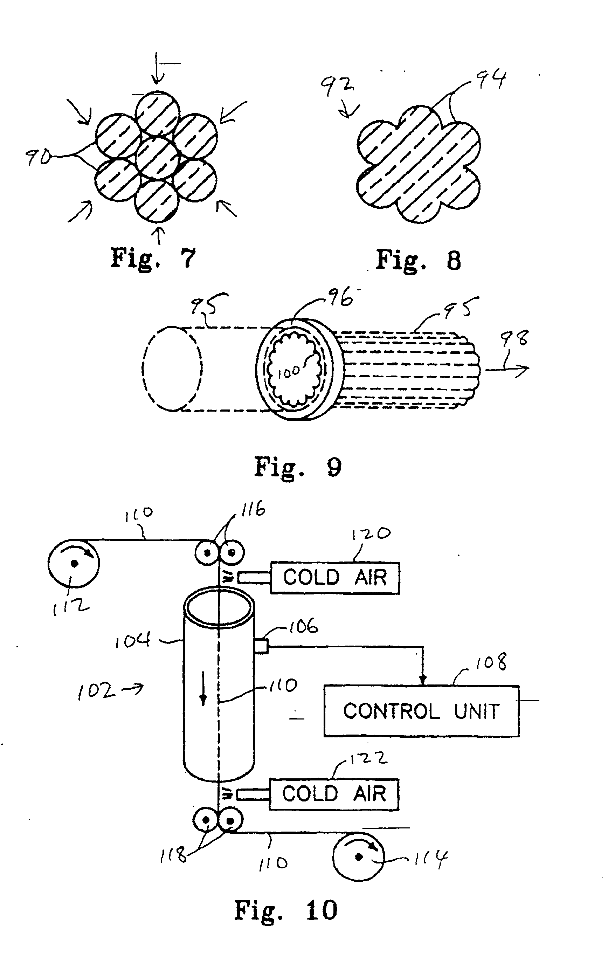

Another method of forming an optical fiber with longitudinal striations is illustrated in FIG. 9. An optical fiber 95 illustrated in broken line is drawn or forced through a die 96 in the direction of an arrow 98. The die 96 has an inner surface 100 formed with a shape conjugate to the desired striations. The fiber 95 may be forced through the die 96 at room temperature, or heated to facilitate formation of the striations. Where the fiber 95 is heated, the temperature is selected to be slightly below the melting point of the material of the fiber 95. This temperature is appoximately 130°C for an acrylic fiber, and 900°C for a glass fiber. The fiber may be subsequentially subjected to heat and tension to stretch the fiber 95 and make the striations smaller.

An apparatus 102 for fabricating an optical fiber is illustrated in FIG. 10, and comprises a pipe heater 104. The heater 104 includes a hollow pipe provided with a suitable heating element (not shown) such that the interior of the pipe is maintained at a desired elevated temperature. Further illustrated are a thermocouple 106 and a control unit 108 for regulating the temperature inside the heater 104.

An optical fiber 110 made of glass, acrylic resin, or the like is fed through the heater 104 from a supply spool 112 to a take-up spool 114. A suitable longitudinal tension is applied to the fiber 110 by means of inlet and outlet pulleys 116 and 118 respectively. Preferably, the fiber 110 is cooled prior to entering the heater 104 by a cold air jet 120, and after emerging from the heater 104 by a cold air jet 122. The hot and cold temperatures, tension, and transit time through the heater 104 are selected to cause the desired longitudinal striations to be formed on the surface of the fiber 110.

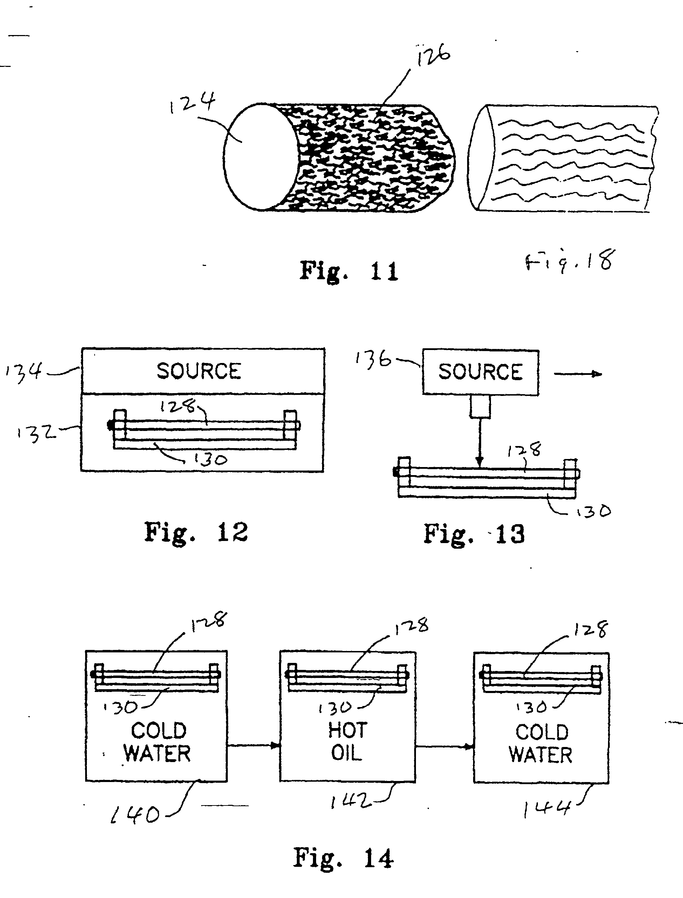

FIG. 11 illustrates an optical fiber 124 which was subjected to thermal shock processing (cool/heat/cool) in an apparatus such as illustrated in FIG. 10, but with a small amount or no tension applied to the fiber 124. Rather than forming longitudinal striations as desired, the process results in the formation of shapes in the circumferential surface of the fiber 124 which may be referred to as "microbends" 126. The microbends 126 are generally oriented along the longitudinal axis of the fiber 124, but are relatively short, and may extend in random directions also. A circumferential surface consisting of pure microbends 126 has properties similar to a surface which is roughened as in the prior art. However, if the microbends 126 are formed under conditions which make them sufficiently elongated along the axis of the fiber 124, they will produce an effect which is intermediate between pure microbends and longitudinal striations, and may be suitable for certain applications.

Longitudinal striations in the circumferential surface of an optical fiber as desired may be formed using a combination of heating and tension. Heating of the fiber urges it to shrink longitudinally, and form microbends. However, if the ends of the fiber are clamped or restrained during heating to prevent shrinkage, the resulting tension results in the formation of the desired longitudinal striations. The formation is enhanced by cooling the fiber before and after heating to create a thermal shock. If desired, the tension applied to the ends of the fiber may be increased or decreased relative to the tension which is induced by shrinkage of the fiber.

Alternative means of heating an optical fiber, panel, or other structure are illustrated in FIGs. 12 and 13. In FIG. 12, an optical fiber 128 is mounted in a fixture 130 which provides support, and also clamps the ends of the fiber 128 to prevent shrinkage. The fixture 130 is placed in an encolsure 132 in which the fiber 128 is exposed to energy from a source 134. The source 134 may produce energy in the form of microwaves, radiant (thermal) energy, or any other form which causes the optical fiber 128 to be heated to a temperature sufficient to form the longitudinal striations.

FIG. 13 illustrates a source 136 for applying energy to the non-enclosed optical fiber 128. The source 136 may be a laser, infrared heater, parabolic mirror for focussing solar energy, etc. The source 136 may radiate energy onto the entire length of the fiber 128, or may radiate energy onto a small portion of the fiber 128 and be moved relative to the fiber 128 to sequentially apply energy along the entire length thereof.

Another method of fabricating a structure is illustrated in FIG. 14. Three tanks are provided, a first tank 140 filled with a cold fluid such as ice water, a second tank 142 filled with a hot fluid such as silicon or salad oil, and a third tank 144 filled with a cold fluid such as ice water. For fabricating an optical fiber of acrylic resin, the temperature in the tanks 140 and 144 is preferably on the order of 5°C, whereas the temperature of the oil in the tank 142 is approximately 142°C, or slightly above the melting point of the resin.

The optical fiber 128 supported in the fixture 130 is successively immersed in the tanks 140, 142, and 144. The immersion time in the cold water tank 140 may be approximately 30 seconds. The immersion time in the hot oil tank 142 may be approximately 3 seconds, whereas the immersion time in the cold water tank 144 may be approximately 30 seconds.

The following examples illustrate alternative methods of forming light radiating structures.

### EXAMPLE 1

Nineteen optical fibers made of acrylic resin which were 1 mm in diameter and 1000 mm long were bundled together in hexagonal close packing in the configuration illustrated in FIG. 7. The bundle was tightened by wrapping hemp thread along the length thereof. The thread was wound tightly around the bundle with adjacent coils of thread touching each other. Then, the bundle was coated with epoxy resin. Immediately after the bundle was coated, it was inserted in a piece of Teflon heat shrink tubing. Hot air was forced into the tubing to cause it to shrink and tighten the bundle further. Four more Teflon tubes were applied over the bundle in the same manner for a total of five layers of heat shrink tubing. The bundle was then heated in a pipe heater at 150°C for one hour. The bundle was then cooled, and disassembled by breaking the tubing and hemp thread. Seven of the optical fibers which were located closest to the center were reformed into a hexagonal shape such as illustrated in FIG. 5 along their entire lengths.

Light was introduced into one end of the resulting structure using a light source 18 including a 150 W halogen lamp 20 such as illustrated in FIG. 1. The light radiated out of the circumferential surface of the structure was visually observed to be substantially uniform over the length of the structure, except for approximately the first 15 cm from the light receiving end.

### EXAMPLE 2

Three stainless steel tanks which were 1000 mm long, 100 mm wide, and 50 mm high were provided. A 1000 mm long x 100 mm wide, 800 W sheet rubber heater was glued to the bottom of one of the tanks. The tank to which the heater was attached was enclosed in a wooden box. This tank was filled with salad oil, and heated to 142 ±1°C. The other two tanks were filled with ice water, and maintained at a temperature of 5°C or lower.

An acrylic resin optical fiber with a diameter of 1 mm and a length of 1000 mm was immersed in one of the cold water tanks for approximately one minute. Then, approximately the center 600 mm of the fiber was immersed in the hot oil tank for approximately 3 seconds, with the ends of the fiber being clamped to prevent shrinkage of the fiber. Finally, the fiber was immersed in the other cold water tank for approximately 30 seconds. As a result, a plurality of longitudinal striations were formed on the surface of the fiber having a cross section generally similar to that illustrated in FIG. 3.

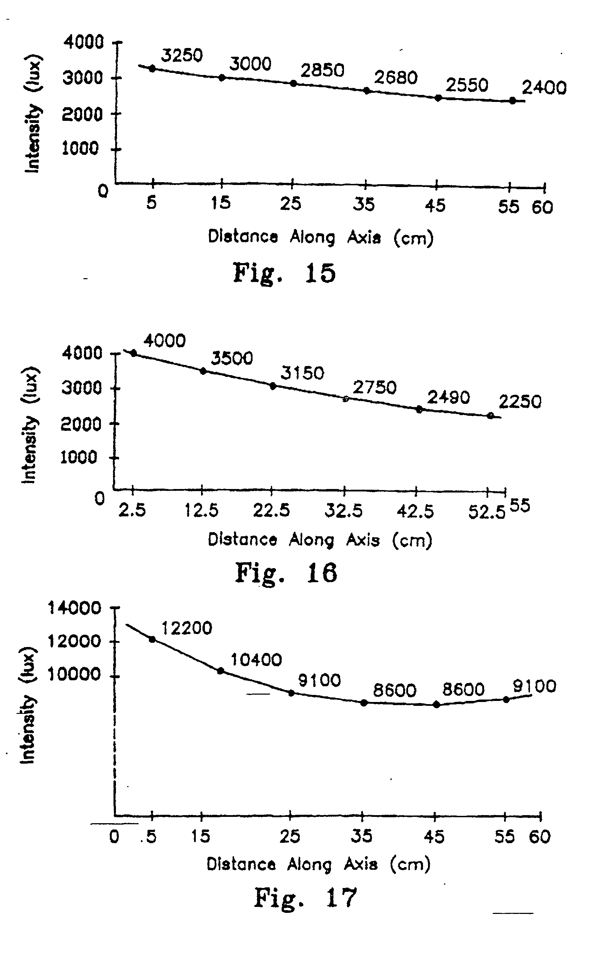

The light source used in EXAMPLE 1 was used to introduce light into one end of the fiber. The amount of luminous flux entering the fiber was measured to be 8.8 Im. The distribution of radiated light intensity along the center 60 mm in which the striations were formed is illustrated in FIG. 15. The amount of luminous flux radiated from the entire circumferential surface of the fiber was measured to be 5.3 Im. This amount was confirmed by converting the measured light intensity in FIG. 15 into luminous flux. The amount of luminous flux radiated from the opposite end of the fiber was measured to be 3.5 Im. Thus, approximately 60% of the luminous flux which entered the fiber was consumed along the striated portion, and approximately 100% of the consumed light was radiated out the surface of the fiber in the striated portion.

### EXAMPLE 3

The experiment of EXAMPLE 2 was repeated, with the difference that the clamping of the fiber in the oil was loosened sufficiently to enable shrinkage of the fiber by a length of 50 mm. As a result, a plurality of striations having a curved or wave shape as illustrated in FIG. 18 were formed on approximately the center 550 mm of the fiber.

Approximately 8.8 Im of luminous flux was introduced into an end of the fiber using the light source of EXAMPLES 1 and 2. The radiated light intensity along the striated portion of the fiber is illustrated in FIG. 16. The total amount of luminous flux radiated by the striated portion of the fiber was 5.1 Im. This amount was confirmed by converting the measured light intensity in FIG. 16 into luminous flux. The amount of luminous flux radiated from the opposite end of the fiber was measured to be 3.7 Im. Thus, approximately 58% of the luminous flux which entered the fiber was consumed along the striated portion, and implies that the radiated light intensity per cm² is greater than in EXAMPLE 2. Generally, the amount of radiated light increases as the amount of shrinkage increases, and the radius of curvature of the wave shapes decreases.

### EXAMPLE 4 according to Invention

An acrylic resin panel which was 600 mm long, 25 mm wide, and 3 mm thick had light reflective aluminum film coated on all surfaces thereof except the light receiving edge, and the light radiating surface thereof. Forty-one grooves having a rectangular cross section as illustrated in FIG. 2 were cut using a blade into the light radiating surface of the panel, parallel to the 600 mm length thereof. The grooves were 0.4 mm wide and 0.4 mm deep, with 2.5 mm spacing provided between adjacent grooves.

The light source 58 illustrated in FIG. 2 was used to introduce approximately 167 Im of luminous flux into the light receiving edge of the panel as shown in the drawing. The intensity of radiated light along the length of the panel is illustrated in FIG. 17. The data implies that approximately 145.5 Im of luminous flux, or 87% of the input light flux, was radiated out the surface of the panel formed with the striations.

### EXAMPLE 5

An acrylic resin optical fiber made by the Asahi Chemical Co. as product designation 100V, was fed through a pipe heater as illustrated in Fig. 10. Approximately 1.5 KW of electrical power was applied to the heater, which had an inner diameter of 40 mm and a length of 300 mm. The temperature in the heater was maintained at 150 ±2°C. The fiber was fed through the heater at a speed of 50 to 100 mm/sec, with sufficient tension being applied to prevent shrinkage of the fiber. The fiber was cooled with cold air jets at approximately 0°C at the inlet and outlet of the pipe heater. This process resulted in the formation of longitudinal striations similar to those formed in

### EXAMPLE 2.

While several illustrative embodiments of the invention have been shown and described, numerous variations and alternate embodiments will occur to those skilled in the art, without departing from the scope of the invention. Accordingly, it is intended that the present invention not be limited solely to the specifically described illustrative embodiments. Various modifications are contemplated and can be made without departing from the scope of the invention as defined by the appended claims.

## Claims

1. A light radiating device comprising:
an optical panel (40) which has a rectangular cross section centered on a longitudinal axis (42) of the panel (40) and which has two panel surfaces extending parallel to each other and parallel to said longitudinal axis (42), two side faces opposite to each other and two end faces opposite to each other,
a light source (50), and
a light guide (56) for guiding light from the light source (50) into one of said end faces of the optical panel (40) along the longitudinal axis (42) thereof, wherein
a plurality of longitudinal grooves (44) or ridges are integrally formed with one (46) of said panel surfaces and extend parallel to and along said longitudinal axis (42), the longitudinal grooves (44) or ridges having walls which constitute respective portions of the one (46) of said panel surfaces such that light entering the one of said end faces of the optical panel (40) is internally reflected between the walls and the multiple reflections cause the angle of incidence to increase along the longitudinal axis (42) beyond the angle of total internal reflection of the panel, thereby providing the one (46) of said panel surfaces as light radiating surface radiating the light in a substantially uniform manner along said longitudinal axis (42).

2. The structure as claimed in claim 1, wherein the side faces, the panel surface opposite to the light radiating surface, and the end face opposite to the end face into which light is guided are provided with reflecting means.

## Patentansprüche

1. Lichtausstrahlende Vorrichtung, aufweisend:
ein optisches Paneel (40), das einen rechteckigen Querschnitt aufweist, der auf eine Längsachse (42) des Paneels (40) zentriert ist, und das zwei Paneel-Flächen, welche sich parallel zueinander und parallel zu der Längsachse (42) erstrecken, zwei Seitenflächen, die einander gegenüberliegen, und zwei Endflächen aufweist, die einander gegenüberliegen;
eine Lichtquelle (50) und
einen Lichtleiter (56) zum Leiten von Licht von der Lichtquelle (50) in eine der Endflächen des optischen Paneels (40) entlang der Längsachse (42) davon, wobei
eine Mehrzahl von Längsrillen (44) oder Längsrippen in einer (46) der Paneel-Flächen einstückig ausgebildet sind und sich parallel zu und entlang der Längsachse (42) erstrecken, wobei die Längsrillen (44) oder Längsrippen Wände aufweisen, die jeweilige Abschnitte der einen (46) der Paneel-Flächen derart bilden, dass das in die eine (46) der End-Flächen des optischen Paneels (40) eintretende Licht innen zwischen den Wänden reflektiert wird, und die Mehrfachreflexionen bewirken, dass der Einfallswinkel entlang der Längsachse (42) über den Winkel der inneren Totalreflexion des Paneels hinaus vergrößert wird, wodurch die eine der Paneel-Flächen als lichtausstrahlende Fläche bereitgestellt ist, die das Licht in im Wesentlichen gleichbleibender Weise entlang der Längsachse (42) ausstrahlt.

2. Struktur nach Anspruch 1, wobei die Seitenflächen, die Paneel-Fläche, die der lichtausstrahlenden Fläche gegenüberliegt, und die Endfläche, die der Endfläche gegenüberliegt, in die das Licht geleitet wird, mit Reflexionsmitteln ausgestattet sind.

## Revendications

1. Dispositif de rayonnement lumineux comprenant :
un panneau optique (40) qui comporte une section transversale rectangulaire centré sur un axe longitudinal (42) du panneau (40) et qui possède deux surfaces de panneau s'étendant parallèlement l'une à l'autre et parallèlement audit axe longitudinal (42), deux faces latérales opposées l'une à l'autre et deux faces d'extrémité opposées l'une à l'autre,
une source de lumière (50), et
un guide de lumière (56) pour guider la lumière depuis la source de lumière (50) dans l'une desdites faces d'extrémité du panneau optique (40) le long de l'axe longitudinal (42) de celui-ci, dans lequel
une pluralité de rainures (44) ou arêtes longitudinales sont formées d'une seule pièce avec l'une (46) desdites surfaces de panneau et s'étendent parallèlement audit axe longitudinal (42) et le long de celui-ci, les rainures (44) ou arêtes longitudinales ayant des parois qui constituent des parties respectives de l'une (46) desdites surfaces de panneau de sorte que la lumière entrant dans l'une desdites faces d'extrémité du panneau optique (40) soit réfléchie intérieurement entre les parois et que les multiples réflexions amènent l'angle d'incidence à augmenter le long de l'axe longitudinal (42) au-delà de l'angle de réflexion interne totale du panneau, faisant ainsi de l'une (46) desdites surfaces de panneau une surface de rayonnement lumineux rayonnant la lumière d'une manière sensiblement uniforme le long dudit axe longitudinal (42).

2. Dispositif selon la revendication 1, dans lequel les faces latérales, la surface de panneau opposée à la surface de rayonnement lumineux, et la face d'extrémité opposée à la face d'extrémité dans laquelle est guidée la lumière sont dotées de moyens de réflexion.
